# EUROPÄISCHE PATENTANMELDUNG

(11) **EP 0 724 104 A1**
(43) Veröffentlichungstag der Anmeldung: **31.07.1996**
(21) Anmeldenummer: 96101084.0
(22) Anmeldetag: 26.01.1996
(51) Int. Cl.: F16L 3/24, F16L 3/227

(54) **Zugentlastungs- und Befestigungselement**

(30) Priorität: 28.01.1995 DE 19502681
(71) Anmelder: FLEXATEC GmbH, 63456 Hanau (DE)
(72) Erfinder: von Eiff, Andreas, D-63456 Hanau (DE)
(74) Vertreter: Schieferdecker, Lutz, Dipl.-Ing.

(57) **Zusammenfassung**

Die Erfindung betrifft ein Zugentlastungs- und Befestigungselement für Kabel und/ oder Leitungen (2, 2'), das in Verbindung mit Führungsketten, in Schaltschränken, in maschinenbau- und/oder elektrotechnischen Anlagen und dergleichen verwendbar ist und das mindestens zwei Klemmteile (3, 4) umfaßt, die zusammen mindestens eine Halteöffnung (5) einstellbarer Größe für die Kabel bzw. Leitungen (2, 2') bilden und aneinander sowie an einem Träger (6) befestigbar sind.

Der Kern der Erfindung besteht darin, daß die Klemmteile (3, 4) relativ zueinander verschiebbar sowie aneinander geführt sind und daß sie zum Befestigen am Träger (6) mit mindestens einem Halteelement in eine Ausnehmung (7) im Träger (6) einsetzbar sind.

## Beschreibung

Die Erfindung betrifft ein für Kabel und/oder Leitungen bestimmtes Zugentlastungs- und Befestigungselement, das in Verbindung mit Führungsketten, in Schaltschränken, in maschinenbau- oder elektrotechnischen Anlagen oder dergleichen verwendbar ist und das mindestens zwei Klemmteile umfaßt, die zusammen mindestens eine Halteöffnung einstellbarer Größe für die Kabel bzw. Leitungen bilden und aneinander sowie an einem Träger befestigbar sind.

Es ist bekannt, zum Fixieren von Kabeln und Leitungen, die in Führungsketten verlegt werden, aus Unterteil und Oberteil bestehende Schellen oder Klemmen zu verwenden. Diese Klemmen werden z. B. mit Hilfe von Schrauben aneinander befestigt und können auch mit Hilfe von Schrauben an dem Träger fixiert werden. Derartige Zugentlastungs- und Befestigungselemente sind wichtige Komponenten für den reibungslosen Betrieb der Führungsketten, insbesondere auch weil die Kabel und Leitungen aufgrund der ständigen Bewegungen einem starken Verschleiß unterliegen und hierbei von Bedeutung ist, ob die Formänderungen durch eine versetzte Montage außerhalb der neutralen Faser erfolgt oder nicht. Vor allem bei gleichzeitiger Befestigung von mehreren Kabeln und Leitungen erfolgt die Montage häufig außerhalb der neutralen Faser, da andernfalls wegen der Bauhöhe das nach unten gleitende Obertrum an den Zugentlastungs- und Befestigungselementen hängenbleiben würde. Ferner sind die Klemmbereiche der bekannten Elemente zwar relativ groß, doch macht dies zusätzliche Teile erforderlich und erschwert die Handhabung.

Der Erfindung liegt die Aufgabe zugrunde, ein Zugentlastungs- und Befestigungselement der hier interessierenden Art zu schaffen, das sich auch zur Aufnahme von Kabeln und Leitungen mit großen Durchmesserunterschieden und gegebenenfalls auch von mehreren Kabeln und Leitungen bei gleichbleibender, möglichst geringer Bauhöhe eignet und auch leicht an bzw. auf oder unter einem Träger befestigt werden kann.

Zur Lösung dieser Aufgabe sieht die Erfindung mit den Merkmalen des kennzeichnenden Teiles des Patentanspruches 1 vor, daß die Klemmteile relativ zueinander verschiebbar sowie aneinander geführt sind und daß sie zum Befestigen am Träger mit mindestens einem Halteelement in eine Ausnehmung im Träger einsetzbar sind.

Jedes nachfolgend als "Element" bezeichnete, aus zwei Klemmteilen bestehende Zugentlastungs- und Befestigungselement umfaßt somit Teile, mit deren Hilfe die Klemmteile in unterschiedlicher Lage aneinander befestigbar und mit dem Träger verbindbar sind. Hierdurch ist es möglich, Kabel und Leitungen mit unterschiedlichen Durchmessern bei einfacher Handhabung zu fixieren.

Gemäß einer bevorzugten Ausführungsform ist das Zugentlastungs- und Befestigungselement durch Verschwenken mit Hilfe der Halteelemente am Träger fixierbar.

Bei den zum Befestigen am Träger dienenden Halteelementen handelt es sich vorzugsweise um einen Rand der Ausnehmung im Träger hintergreifende Fußstücke bzw. um auf dem Rand der Ausnehmung aufliegende Vorsprünge. Mit ihrer Hilfe läßt sich das Element in einer optimalen Position fixieren, wobei der zum Einsetzen und Befestigen dienende Schwenkwinkel deutlich kleiner als 90° sein kann.

Vorzugsweise steht die Teilungsebene des Elementes senkrecht zur Ebene des Trägers, wodurch sich das Element bei gleichbleibender Bauhöhe zur Aufnahme von Kabeln und Leitungen mit unterschiedlichem Durchmesser eignet. Ferner ist hiermit ein geringer Platzbedarf bei der Befestigung von Kabeln und Leitungen mit kleinem Durchmesser verbunden.

Weitere Merkmale der Erfindung gehen aus Unteransprüchen und der Beschreibung in Verbindung mit der Zeichnung hervor.

Die Erfindung wird nachstehend anhand eines Ausführungsbeispieles, das in der Zeichnung dargestellt ist, näher beschrieben. Dabei zeigen:
- Fig. 1:: eine perspektivische Ansicht eines Zugentlastungs- und Befestigungselementes in geöffnetem Zustand;
- Fig. 2:: eine perspektivische Ansicht wie in Fig. 1 von einem geschlossenen Zugentlastungs- und Befestigungselement;
- Fig. 3:: eine perspektivische Ansicht eines Trägers und eines seitlich dargestellten, zusätzlichen Befestigungselementes in kleinerem Maßstab;
- Fig. 4:: eine perspektivische Ansicht eines Trägers und eines Zugentlastungs- und Befestigungselementes vor dem Befestigen am Träger;
- Fig. 5:: in nochmals anderem Maßstab eine Draufsicht auf einen Träger mit einem bereits eingesetzten Zugentlastungs- und Befestigungselement und mit einem Zugentlastungs- und Befestigungselement vor dem Einsetzen und
- Fig. 6:: eine perspektivische Darstellung eines Trägers mit zwei Zugentlastungs- und Befestigungselementen und mit von diesen gehaltenen Leitern in nochmals anderem Maßstab.

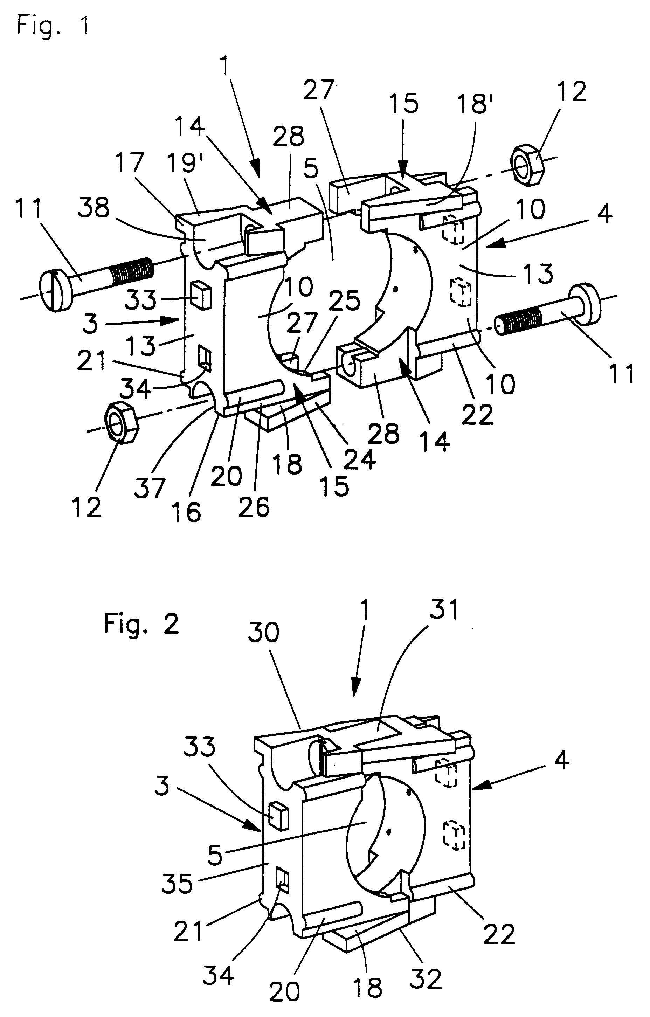

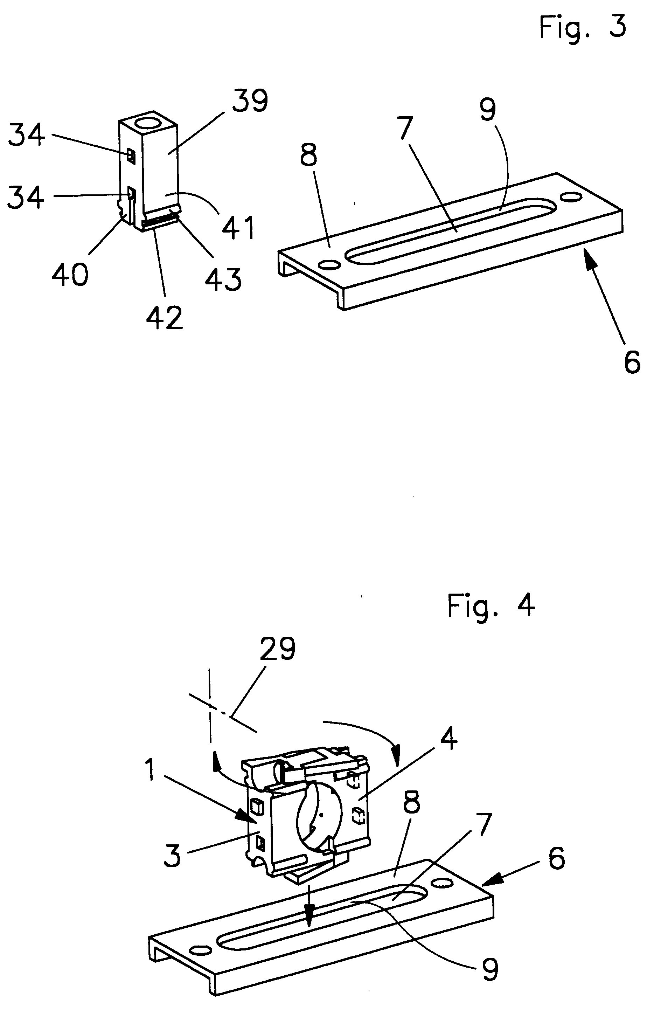

Ein nachfolgend wiederum nur als "Element" 1 bezeichnetes Zugentlastungs- und Befestigungselement für Kabel und/oder Leitungen 2, 2', die in nicht dargestellten Führungsketten angeordnet sind, umfaßt mindestens zwei Klemmteile 3, 4, die im zusammengebauten Zustand (Fig. 2) eine Halteöffnung 5 einstellbarer Größe für die Kabel bzw. Leitungen 2, 2' bilden. Die beiden Klemmteile 3, 4 sind aneinander sowie an einem Träger 6 befestigbar, der gemäß dem in den Figuren 3 bis 6 dargestellten Ausführungsbeispiel eine Ausnehmung 7 in Gestalt eines Langloches aufweist. Der Träger 6 ist vorzugsweise eine Schiene mit einem U-förmigen Querschnitt, mit einer den Kabeln und Leitungen 2, 2' zugewandten, ebenen Oberfläche 8 und mit einem die Ausnehmung 7 begrenzenden Rand 9 (Fig. 3).

Die Klemmteile 3, 4 sind jeweils Hälften des Zugentlastungs- und Befestigungselementes 1 und bestehen je aus einem etwa C-förmigen Grundkörper 10. Gemäß Ausführungsbeispiel sind die beiden Klemmteile 3, 4 relativ zueinander verschiebbar sowie aneinander und ineinander geführt. Sie können identisch sein und sind gegeneinander austauschbar. In versetzter Lage passen sie formschlüssig zusammen und werden gemäß dem in Fig. 1 dargestellten Ausführungsbeispiel mit Hilfe von Schrauben 11 und Muttern 12 aneinander befestigt.

Die identischen Grundkörper 10 der beiden Klemmteile 3, 4 umfassen je ein Mittelstück 13 und zum Befestigen und Führen aneinander sowie zum Befestigen am Träger 6 dienende Endstücke 14 und 15. Die Endstücke 14 und 15 befinden sich je nach Einbaulage am trägerseitigen Ende 16 oder an dem dem Träger 6 abgewandten, entgegengesetzten Ende 17, wobei sich die Bezugszahlen 16 und 17 auf das die linke Hälfte (Fig. 1) des Elementes 1 bildende Klemmteil 3 beziehen. Es versteht sich, daß das Endstück 14 bei dem anderen, die zweite Hälfte des Elementes 1 bildenden, in verschwenkter Lage zusammenpassenden Klemmteil 4 trägerseitig und das Endstück 15 an der dem Träger abgewandten Seite angeordnet sind.

Die Klemmteile 3, 4 weisen zum Befestigen am Träger 6 verschiedene Halteelemente 18 und 19 bzw. 20, 21 und 22, 23 auf. Die Halteelemente 18 und 19 sind jeweils Fußstücke in Gestalt von seitlich vorstehenden, in Draufsicht dreieckigen Vorsprüngen. Sie bilden zusammen mit dem Grundkörper 10 eine starre, einstückige Einheit. Die als Halteelemente 18, 19 dienenden Fußstücke sind spitzwinklig, wobei das spitze Ende 24 jeweils dem Rand 25 der Halteöffnung 5 zugewandt ist.

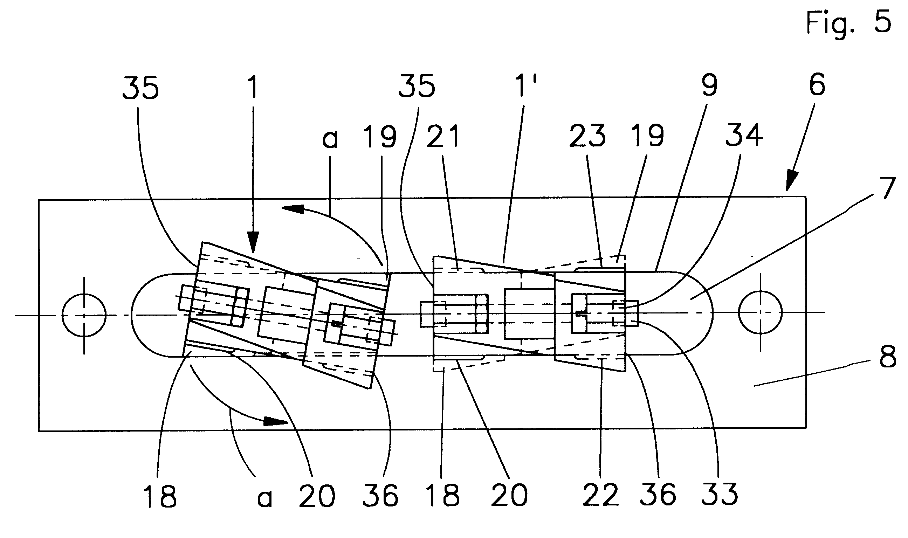

Im zusammengebauten Zustand gemäß Fig. 2 und nach dem Einsetzen des Elementes 1 in die Ausnehmung 7 im Träger 6 hintergreifen die Fußstücke bzw. Halteelemente 18, 19 den Rand 9 der Ausnehmung 7, wie dies auch aus einem Vergleich der Darstellung der beiden Elemente 1 und 1' in Fig. 5 hervorgeht. Zum Einsetzen wird das Element 1 an beliebiger Stelle mit den Halteelementen 18, 19 in die Ausnehmung 7 in fluchtender Lage eingeführt und sodann in Richtung der Pfeile a (Fig. 5, entgegen dem Uhrzeigersinn) geschwenkt, wobei die Halteelemente 18, 19 unter den Rand 9 der Ausnehmung 7 zu liegen kommen. Die anderen, trägerseitigen Halteelemente 20 bis 23 sind ebenfalls seitlich von den Grundkörpern 10 vorstehende Vorsprünge und befinden sich in einer Lage derart über den als Fußstücken dienenden Halteelementen 18 und 19, daß sie nach dem Einstecken und Verschwenken als Auflageelement auf dem Rand 9 der Ausnehmung 7 aufliegen. Die seitlich vorstehenden Halteelemente 20 bis 23 sind wulstförmige Vorsprünge, wie die Figuren zeigen. Die Klemmteile 3 und 4 weisen jeweils trägerseitig und an den gegenüberliegenden Seiten Halteelemente 18 bis 23 auf.

Ferner befinden sich am Grundkörper 10 jeweils in die Ausnehmung 7 im Träger 6 passende Randstücke 26 zwischen den Fußstücken 18 und 19 und den zugehörigen, als Halte- und Auflageelement 20 bzw. 23 dienenden Vorsprüngen (Fig. 1).

Die an den Enden 16 bzw. 17 des Grundkörpers 10 angeordneten Endstücke 14 bzw. 15 sind einerseits als ein U-förmiges Führungs- und Aufnahmeteil 27 bzw. als ein dem Führungs- und Aufnahmeteil 27 des jeweils anderen Klemmteiles zugeordnetes, komplementäres Einsteckteil 28 ausgebildet. Dadurch ist es möglich, die beiden Klemmteile 3 und 4 im zusammengesteckten Zustand aneinander zu führen und relativ zueinander zu verschieben. Sie überlappen sich im zusammengebauten Zustand trägerseitig und auf der gegenüberliegenden, freien Seite.

Geteilt ist das Element 1 durch eine vertikal zur Oberfläche 8 des Trägers 6 stehende Teilungsebene 29.

Das Element 1 weist eine definierte, vorgegebene Höhe mit trägerseitig und auf der gegenüberliegenden Seite 30 (Fig. 2) angeordneten, ebenen Flächen 31 und 32 auf. Die Bauhöhe bzw. der Abstand der beiden Flächen 31 und 32 voneinander ist z.B. annähernd gleich der Höhe einer bestimmungsgemäßen, in den Figuren nicht dargestellten Führungskette.

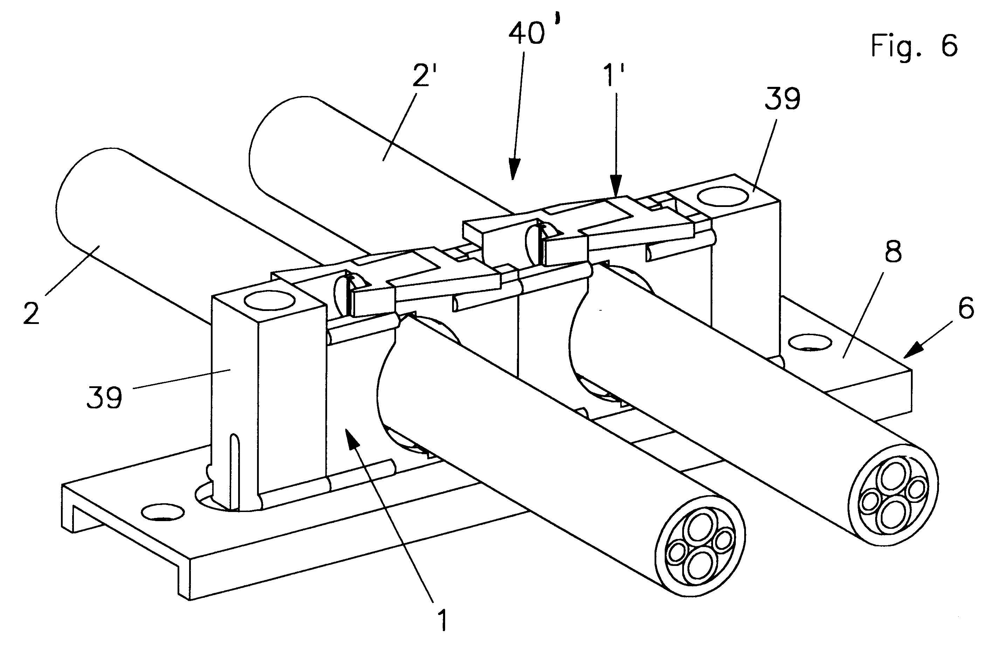

Zum Fixieren nebeneinander angeordneter Elemente 1, 1' (Figuren 5 und 6) aneinander sind einander zugeordnete Vorsprünge 33 und Ausnehmungen 34 außen an den Schmalseiten 35, 36 der Elemente 1, 1' vorgesehen.

Die Abmessungen der verschiedenen Teile der Klemmelemente 3 und 4 sind derart gewählt, daß die Halteöffnung 5 nach dem Einsetzen in den Träger 6 jeweils trägerseitig mit ihrem Rand 25 annähernd mit der Oberfläche 8 des Trägers 6 fluchtet.

Zur Aufnahme der Schrauben 11 und Muttern 12 dienende Ausnehmungen 37 und 38 sind an den beiden Enden 16 und 17 der Klemmteile 3, 4 angeordnet. Die Schrauben 11 und Muttern 12 liegen daher versenkt im jeweiligen Grundkörper 10 der Klemmteile 3, 4. Um dies zu erreichen liegen die Ausnehmungen 37, 38 auf dem Niveau der als wulstförmiger Vorsprung bzw. als Fußstück gestalteten Halteelementen 18 bis 23.

Sobald die Elemente 1 bzw. 1' entsprechend den Pfeilen in den Figuren 4 und 5 in den Träger 7 eingesetzt und durch Verschwenken mit dem Träger 7 verriegelt sind, können sie z.B. mit Hilfe eines Befestigungselementes 39 gegen seitliches Verrutschen gesichert werden (Fig. 3 und 6). Gemäß Ausführungsbeispiel liegt das Befestigungselement 39 an der Schmalseite 35 eines der Elemente 1, 1' an und weist zu den Ausnehmungen 34 und Vorsprüngen 33 der Elemente 1, 1' komplementäre Vorsprünge 33 bzw. Ausnehmungen 34 auf.

In der Regel werden die Elemente 1 nach dem Befestigen der Klemmteile 3, 4 aneinander in den Träger 6 eingesetzt und dann um einen Winkel von weniger als 90° verschwenkt. Der Schwenkwinkel ist zweckmäßigerweise sogar kleiner als 30° bei entsprechender Gestaltung der Fußstücke 18, 19.

Gemäß Ausführungsbeispiel ist das Befestigungselement 39 ein Spreizelement und weist hierzu zwei Schenkel 40, 41 auf, die nach dem Einsetzen des Befestigungselementes 39 in die Ausnehmung 7 des Trägers 6 mit Hilfe einer nicht dargestellten Befestigungsschraube auseinander gedrückt werden. Zum Fixieren am Träger 6 befinden sich den Rand 9 der Ausnehmung 7 hintergreifende Vorsprünge 42 und auf dem Rand 9 aufliegende Vorsprünge 43 jeweils außen an den Schenkeln 40, 41.

Das Befestigungselement 39 ist an jeder beliebigen Stelle der eine gleichmäßige Breite aufweisenden und zweckmäßigerweise als Langloch gestalteten Ausnehmung 7 befestigbar, so daß es weder selbst noch die von ihm gehaltenen Elemente 1, 1' verrutschen können.

Die Elemente 1, 1' bilden zusammen mit einem oder mehreren Befestigungselementen 39 gemäß Fig. 6 eine Vorrichtung 40' zum Befestigen von in Führungsketten angeordneten Kabeln und/oder Leitungen 2, 2'. Charakteristisch für diese Vorrichtung 40' ist zwar, daß sie aus die Kabel und Leitungen 2, 2' unmittelbar aufnehmenden Zugentlastungs- und Befestigungselementen 1, 1' einerseits und die Elemente 1 bzw. 1' sichernden Befestigungselementen 39 andererseits besteht. Die Elemente 1, 1' sind als Zugentlastungs- und Befestigungselemente aber auch ohne die Befestigungselemente 39 in Verbindung mit Führungsketten, in Schaltschränken bzw. in maschinenbau- oder elektrotechnischen Anlagen und dergleichen einsetzbar. In diesem Fall werden sie als reine Steckteile an beliebiger Stelle lediglich in die Ausnehmung 7 eingesetzt und lassen sich dann durch Verschwenken verriegeln oder werden zusätzlich in die jeweils gewünschte Position verschoben.

## Patentansprüche

1. Zugentlastungs- und Befestigungselement für Kabel und/oder Leitungen (2, 2'), das in Verbindung mit Führungsketten, in Schaltschränken, in maschinenbau- und/oder elektrotechnischen Anlagen und dergleichen verwendbar ist und das mindestens zwei Klemmteile (3, 4) umfaßt, die zusammen mindestens eine Halteöffnung (5) einstellbarer Größe für die Kabel bzw. Leitungen (2, 2') bilden und aneinander sowie an einem Träger (6) befestigbar sind, dadurch gekennzeichnet, daß die Klemmteile (3, 4) relativ zueinander verschiebbar sowie aneinander geführt sind und daß sie zum Befestigen am Träger (6) mit mindestens einem Halteelement in eine Ausnehmung (7) im Träger (6) einsetzbar sind.

2. Element nach Anspruch 1, dadurch gekennzeichnet, daß es als Steckelement an beliebiger Stelle in die Ausnehmung (7) einsetzbar und durch Verschwenken am Träger (6) befestigbar ist.

3. Element nach einem oder mehreren der vorhergehenden Ansprüche, dadurch gekennzeichnet, daß das Klemmteil (3, 4) mindestens ein seitlich vorstehendes, im eingesetzten Zustand einen Rand (9) der Ausnehmung (7) hintergreifendes Halteelement (18, 19) in Form eines dreieckigen Fußstückes aufweist.

4. Element nach einem oder mehreren der vorhergehende Ansprüche, dadurch gekennzeichnet, daß das Klemmteil (3, 4) mindestens ein seitlich vorstehendes, im eingesetzten Zustand auf dem Rand (9) der Ausnehmung (7) aufliegendes Halteelement (20 bis 23) in Gestalt eines dem Fußstück zugeordneten, wulstförmigen Auflageelementes umfaßt.

5. Element nach einem oder mehreren der vorhergehenden Ansprüche, dadurch gekennzeichnet, daß das Klemmteil (3, 4) trägerseitig und an der gegenüberliegenden Seite jeweils Halteelemente (18 bis 23) aufweist.

6. Element nach einem oder mehreren der vorhergehenden Ansprüche, dadurch gekennzeichnet, daß beide Klemmteile (3, 4) identisch sind.

7. Element nach einem oder mehreren der vorhergehenden Ansprüche, dadurch gekennzeichnet, daß die im Träger (6) angeordnete Ausnehmung (7) ein Langloch ist.

8. Element nach einem oder mehreren der vorhergehenden Ansprüche, dadurch gekennzeichnet, daß die als Fußstücke gestalteten Halteelemente (18, 19) am Grundkörper (10) einteilig sowie starr angeordnet sind.

9. Element nach einem oder mehreren der vorhergehenden Ansprüche, dadurch gekennzeichnet, daß die Fußstücke spitzwinklig sind, wobei das spitze Ende (24) dem Rand (25) der Halteöffnung (5) zugewandt ist.

10. Element nach einem oder mehreren der vorhergehenden Ansprüche, dadurch gekennzeichnet, daß jedes Klemmteil (3, 4) an seinem einen Ende (16) ein U-förmiges Führungs- und Aufnahmeteil (27) und an seinem anderen Ende (17) ein dem Führungs- und Aufnahmeteil (27) des jeweils anderen Klemmteiles (3 bzw. 4) zugeordnetes Einsteckteil (28) aufweist.

11. Element nach einem oder mehreren der vorhergehenden Ansprüche, dadurch gekennzeichnet, daß die Klemmteile (3, 4) nach dem Befestigen aneinander in die Ausnehmung (7) des Trägers (6) einsetzbar, schwenkbar und verschiebbar sind, wobei der Schwenkwinkel kleiner als 90° und vorzugsweise kleiner als 30° ist.

12. Element nach einem oder mehreren der vorhergehenden Ansprüche, gekennzeichnet durch eine vertikal zur Oberfläche (8) des Trägers (6) stehende Teilungsebene (29) und eine definierte, vorgegebene Höhe mit trägerseitig und auf der gegenüberliegenden Seite (30) angeordneten, ebenen Flächen (31, 32).

13. Element nach einem oder mehreren der vorhergehenden Ansprüche, dadurch gekennzeichnet, daß zum Fixieren nebeneinander angeordneter Elemente (1, 1') jeweils an den Schmalseiten (35, 36) einander zugeordnete Vorsprünge (33) und/oder Ausnehmungen (34) vorgesehen sind.

14. Element nach einem oder mehreren der vorhergehenden Ansprüche, dadurch gekennzeichnet, daß die Bauhöhe annähernd gleich der Höhe einer bestimmungsgemäß zugeordneten Führungskette ist.

15. Element nach einem oder mehreren der vorhergehenden Ansprüche, dadurch gekennzeichnet, daß Ausnehmungen (37, 38) für versenkt angeordnete Schrauben (11) zum Einstellen der Halteöffnung (5) vorgesehen sind und auf einem Niveau zwischen den wulstförmigen Vorsprüngen (20 bis 23) und den Fußstücken (18, 19) liegen.

16. Vorrichtung zum Befestigen von in Führungsketten angeordneten Kabeln und Leitungen (2, 2') an einem eine längliche Ausnehmung (7) aufweisenden Träger (6) mit Hilfe von mindestens einem in die Ausnehmung (7) einsetzbaren und längs der Ausnehmung (7) verschiebbaren und durch Verschwenken fixierbaren Zugentlastungs- und Befestigungselement (1, 1') und mit Hilfe von mindestens einem an mindestens einer Schmalseite (35, 36) des Zugentlastungs- und Befestigungselementes (1, 1') angreifenden, ebenfalls in die Ausnehmung (7) einsetzbaren Befestigungselementes (39).

17. Element nach einem oder mehreren der vorhergehenden Ansprüche, dadurch gekennzeichnet, daß mindestens zwei in einer Ebene quer zur Kabel- bzw. Leitungsachse ineinander geführte Klemmteile (3, 4) mindestens eine Halteöffnung (5) einstellbarer Größe bilden und in einem Langloch (7) eines plattenförmigen Teiles (6) einsetzbar und fixierbar sind.
